# EUROPEAN PATENT SPECIFICATION

(11) **EP 2 457 751 B1**
(45) Date of publication and mention of the grant of the patent: **02.11.2016**
(21) Application number: 11183747.2
(22) Date of filing: 04.10.2011
(51) Int. Cl.: B60D 1/06, B21J 5/08, B21J 5/00, B21J 5/02, B21K 1/72

(54) **Method for manufacturing a ball part, as well as a ball part**
Verfahren zur Herstellung eines Kugelteils sowie ein Kugelteil
Procédé de fabrication d'une portion de boule et une portion de boule

(30) Priority: 29.11.2010 NL 2005770
(43) Date of publication of application: 30.05.2012
(73) Proprietor: Terwa B.V., 3401 MZ IJsselstein (NL)
(72) Inventor: Som, Michiel, 4941 JG Raamsdonksveer (NL); Nica, Gheorghe, 500398 Brasov (RO); Buzdugan, Daniel, 507270 Brasov (RO); Pintilie, Ioan, 500365 Brasov (RO)
(74) Representative: Nederlandsch Octrooibureau

(56) References cited:
- WO-A1-2009/088284
- US-A1- 2009 126 445
- US-A1- 2010 003 103

## Description

The present invention relates to a method for manufacturing a ball part, comprising a ball, connecting part and attachment part, of the towing hook for a vehicle, comprising providing a material part and shaping the latter by forging. A towing hook for a vehicle generally consists of two parts. A structural or chassis part attached to the chassis and composed of various, often welded, profiled sections which are attached to the undercarriage of the vehicle by bolts. The second part is the ball part which, on one side, is attached to the chassis part of the towing hook and, on the other side, is provided with the ball with which the shaft of the vehicle to be towed engages. The ball part is subject to very high loads, both tensile and compressive loads, as well as fatigue loads which can act in all directions. The ball part therefore has to satisfy particularly high demands.

In the prior art, there are two methods for manufacturing the ball part. The oldest technique consists of producing the entire ball part by means of forging. This technique results in a product with sufficiently good mechanical properties. However, in particular the connecting part for each vehicle is more or less unique. This means that, depending on the position of the bumper and the design of the towing hook (detachable or non-detachable) and the like, the height of the bottom side of the vehicle, the shape of the connecting part has to be adapted. As a result thereof, it is hardly cost-effective to produce a separate forging die for a relatively small series in order to produce ball parts by forging.

For this reason, a second technique has been proposed which consists of joining the various parts to one another. Such connections have to satisfy particularly high demands. It has been found that, as a result thereof, a great many measures have to be taken and yet, in a number of cases, problems related to fatigue strength still occur. Such a technique is described in WO 2009/088284.

A third technique is described in US 2009/0126445, in which the connecting part and attachment part are separate from the ball. The connecting part is provided with an opening in which the ball is subsequently fixed. The strength of such a connection cannot be guaranteed.

It is an object of the present invention to provide a ball part which, on the one hand, can be readily provided with a connecting part of different length and shape and which, on the other hand, has sufficiently good mechanical properties and can be manufactured relatively easily.

This object is achieved with the above-described ball part in that the cross-sectional shape of the material part substantially corresponds to the cross-sectional shape of the connecting part, and the volume of the material part is chosen depending on the embodiment of the attachment part and the connecting part, and shaping by forging comprises solely forging that end of the attachment part which is turned away from the ball.

According to the present invention, forging of the attachment part is carried out independently from the manufacturing process of the remaining part of the ball part, that is to say the ball itself and the connecting part. This means that an attachment part of a certain volume is provided and this volume is subsequently turned into the desired shape by means of forging. The connecting part is not subjected to such a forging operation. Depending on the desired shape, however, it is of course subjected to a bending operation, but as a result thereof, the cross-sectional shape remains substantially similar to the original cross-sectional shape.

According to a particular embodiment of the present invention, the volume of the material part is determined by shortening the material part to a certain length. If the material part is, for example, round rod material, this is shortened in such a manner that sufficient volume is present at the ends for the attachment part and, optionally, the ball part, and that exactly the required length remains for the connecting part. This means that a ball part with a relatively short connecting part will have a material part with a shorter length (= smaller volume) than a ball part with a connecting part of a greater length. The material part may have any conceivable cross-sectional shape and may, if desired, have a cross section which decreases in the direction of the ball.

The ball may be attached to the connecting part in any conceivable way. Thus, it is possible to provide a ball and to weld it to the connecting part or to upset it.

According to an advantageous embodiment of the invention, the ball is produced by upsetting the material part from which the ball part is made.

The connecting part may have any conceivable shape, with this generally comprising a part which is vertical (in use) near the ball. The shape of the connecting part may be produced before or after the attachment part is provided by forging and may be achieved by hot or cold bending. Said bending may take place in one or more planes, depending on the type of ball. At present, balls are known which can be swung aside and in which the shape of the connecting part extends in three dimensions.

According to a further embodiment of the present invention, the forging comprises hot-pressing.

By means of the present invention, according to a particular embodiment, a ball part is effected which comprises a single continuous metallic part forming a single continuous structure. In this way, the required particularly high strength can be achieved.

According to a further advantageous embodiment of the invention, the attachment part is provided with an attachment mechanism for attachment to the chassis part in which the ball part may optionally be configured to be detachable. Such an attachment mechanism may comprise a fixed attachment means or a detachable attachment means. A detachable attachment mechanism can operate in any direction, such as for example vertical.

The invention also relates to a ball part of a towing hook comprising a ball, connecting part and attachment part, wherein the connecting part comprises a substantially smooth external surface which is obtained by rolling or drawing and wherein said ball part comprises a single metallic part forming a single continuous structure and the attachment part comprises an external surface which is obtained by forging. More particularly, such a ball part differs from ball parts according to the prior art in that the connecting part has a relatively smooth external surface while the attachment part, due to the above-described unique forging operation is provided with a forging seam which is visible along the circumference thereof. In addition, a similar forging structure can be detected in the attachment part during a metallographic inspection, while such a forging structure is not present in the connecting part.

Forging not only prevents a break in the material, but also makes it possible to further improve the mechanical properties of the steel which is being used. Optionally, heat treatments can be carried out.

The invention will be explained below with reference to an exemplary embodiment illustrated in the drawing, in which:
Fig. 1 diagrammatically shows a towing hook attached to a partly illustrated vehicle;
Fig. 2 shows the ball part of the towing hook illustrated in Fig. 1 in detail; and
Figs. 3a-d show the various stages of manufacturing such a ball part.

The invention will be explained below by means of a description of the manufacturing process of a ball part. However, it should be understood that this ball part may have any conceivable shape which is desired in the prior art. The ball part may comprise a detachable ball part, a displaceable ball part, or a permanently fixed ball part. The embodiment of the ball part will depend on the chosen design.

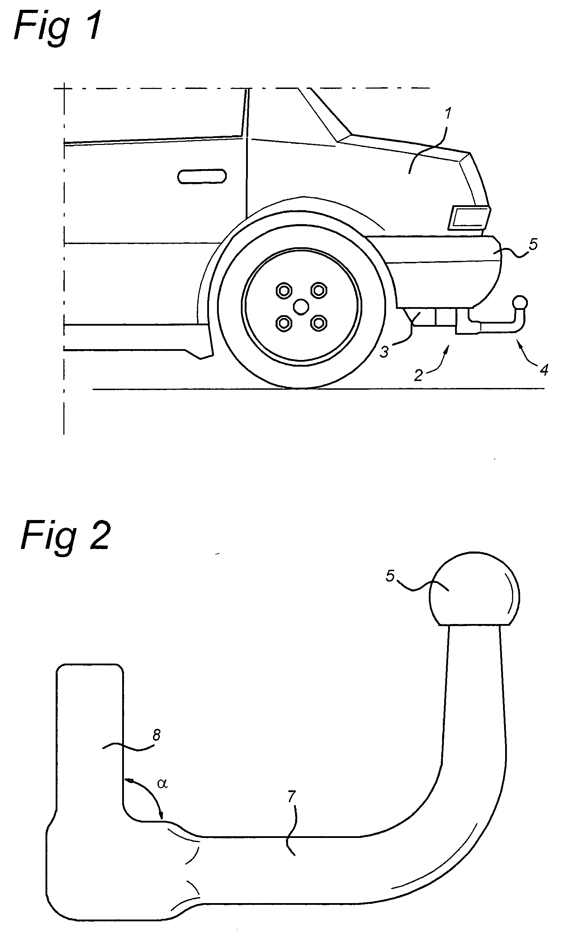

Fig. 1 diagrammatically shows the rear of a vehicle 1 which is provided with a towing hook 2. The towing hook 2 consists of a chassis part 3 which comprises various profiled sections which are joined to one another by welding or the like and which contain bolts connected to the undercarriage of the (self-supporting) vehicle. A ball part 4 is to be attached to the latter. In the present exemplary embodiment, a fixedly attached ball part is shown, but it will be understood that the above-described other constructions for attaching the ball part 4 to the chassis part can be used.

Fig.2 shows that the ball part illustrated here consists of an attachment part 8 with an attachment mechanism (not shown in any more detail) for attachment to the chassis part, a connecting part 7 and the ball 5 to which the shaft of the trailer (not shown) is connected. This attachment mechanism may be configured for permanent or detachable attachment.

It will be understood that if the ball is configured such that it can be detached, swung aside or the like, the attachment part is adapted in a corresponding manner.

In all cases, the attachment part 8 is configured to be as universal as possible. This means that, for a permanent attachment, the construction illustrated in Fig. 2 is used. With constructions in which the ball part can be displaced with respect to the vehicle, the attachment part will be configured differently, but always in such a manner that it can be used on a large range of vehicles.

As is illustrated in Fig. 1, the vehicle 1 is provided with a bumper 5. The width and height of such a bumper varies between the different vehicles. In addition, the spot where the chassis part 3 ends and the ball part is attached varies between the various vehicles, as does the height of the attachment location of the ball part.

Since the position of the ball 5 with respect to the road has to be approximately the same in order to bring the towed trailer into the correct driving position, the connecting part 7 has to be configured differently in each case, depending on the vehicle.

The present invention proposes a method by means of which such a ball part can be produced in a simple manner using a forging die which can be used for most applications.

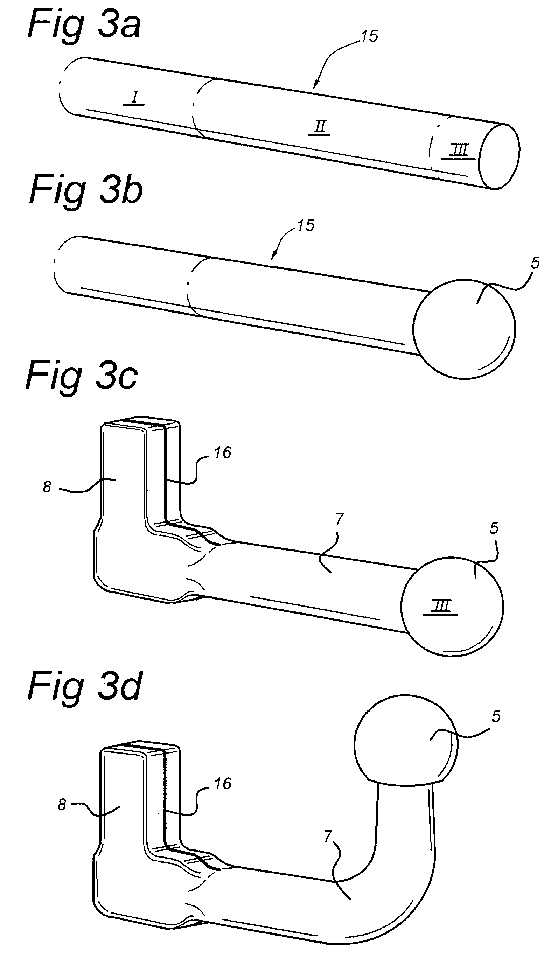

Fig. 3a shows a starting material part which is denoted by reference numeral 15. This is a standard, preferably round bar of material which has the mechanical properties which are required for towing hook parts.

Fig. 3b shows how the ball is produced by upsetting. Fig. 3c shows the state after the attachment part has been forged, while Fig. 3d shows the state after the connecting part 7 has been positioned by bending.

As can be seen from Fig. 3a, the material part is divided into three parts I-III in an imaginary way. Part I is used to produce the attachment part 8 by forging, as is illustrated in step c. Part II forms what is to become connecting part 7, while part III forms the ball.

As has been explained above, part II is of variable length. If part II has to be relatively short, part II in Fig. 3a will also be chosen to be relatively short, as a result of which the rod material part is correspondingly short. If the connecting part 7 is longer, then part II will also be chosen to be longer.

According to the present invention, the attachment part 8 is produced by forging of in each case a substantially constant amount of material, denoted by reference numeral I in Fig. 3a. Only this material part is placed in a forging die, with parts II and III protruding from said forging die. After forging, attachment part 8 has a forging seam 16. The ball 5 may be produced before, after or during the forging of attachment part 8, but part II will in no case be subject to a forging operation and will only be bent if this is required.

By means of the present invention, it is possible to produce an attachment part 8 using a single forging die while the resultant ball part, more particularly the connecting part 7, can be used for all kinds of vehicles. It will be understood that if the attachment part has to be configured differently, a different forging die will be used.

Upon reading the above, those skilled in the art will immediately be able to think of variants which are covered by the scope of the attached claims. In addition, rights are expressly requested for the subject matter of the subclaims, separate from Claim 1 or 10.

## Claims

1. Method for manufacturing a ball part (4), comprising a ball (5), a connecting part (7) and an attachment part (8), of a towing hook (2) for a vehicle (1), comprising providing a material part (15) and shaping the latter by forging, **characterized in that** the cross-sectional shape of the material part (15) corresponds to the cross-sectional shape of the connecting part (7), and the volume of the material part (15) is chosen depending on the embodiment of the attachment part (8) and the connecting part (7), and shaping by forging comprises solely forging that end of the attachment part (8) which is turned away from the ball (5).

2. Method according to claim 1, wherein choosing the volume of the material part comprises shortening the material part (15) to a certain length.

3. Method according to one of the preceding claims, wherein the ball (5) is produced by upsetting the material part from which the ball part is made.

4. Method according to one of the preceding claims, wherein the connecting part is bent in order to shape the attachment part by forging.

5. Method according to one of the preceding claims, wherein the connecting part is bent after the attachment part has been shaped by forging.

6. Method according to one of the preceding claims, wherein the forging comprises hot-pressing.

7. Method according to one of the preceding claims, wherein the ball part comprises a single part forming a continuous material structure.

8. Method according to one of the preceding claims, wherein the attachment part is provided with an attachment mechanism (9).

9. Method according to claim 8, wherein the attachment mechanism is configured so as to mount the ball part in a vertically removable manner.

10. Ball part (4) of a towing hook (2), obtained by a method according to one of the preceding claims 1 to 9, comprising a ball (5), connecting part (7) and attachment part (8), wherein the connecting part comprises a substantially smooth external surface which is obtained by rolling or drawing, and the attachment part (8) comprises an external surface which is obtained by forging, and wherein said ball part comprises a single metallic part forming a single continuous structure.

11. Ball part according to claim 10, wherein the attachment part comprises a forging seam (16) extending along the outer periphery thereof.

## Patentansprüche

1. Verfahren zum Herstellen eines Kugelteiles (4), umfassend eine Kugel (5), ein Verbindungsteil (7) und ein Anbringungsteil (8) eines Zughakens (2) für ein Fahrzeug (1), umfassend ein Bereitstellen eines Materialteiles (15) und Formen des letzteren durch Schmieden,
**dadurch gekennzeichnet,**
**dass** die Querschnittsform des Materialteiles (15) der Querschnittsform des Verbindungsteiles (7) entspricht,
**dass** das Volumen des Materialteiles (15) in Abhängigkeit von der Ausführungsform des Anbringungsteiles (8) und des Verbindungsteiles (7) gewählt wird und dass das Formen durch Schmieden lediglich ein Schmieden desjenigen Endes des Anbringungsteiles (8) umfasst, welches von der Kugel (5) abgewandt ist.

2. Verfahren nach Anspruch 1, wobei die Wahl des Volumens des Materialteiles ein Verkürzen des Materialteiles (15) auf eine gewisse Länge umfasst.

3. Verfahren nach einem der vorhergehenden Ansprüche, wobei die Kugel (5) dadurch hergestellt wird, dass der Materialteil, aus dem der Kugelteil gebildet wird, gestaucht wird.

4. Verfahren nach einem der vorhergehenden Ansprüche, wobei der Verbindungsteil gebogen wird, um den Anbringungsteil durch Schmieden zu formen.

5. Verfahren nach einem der vorhergehenden Ansprüche, wobei der Verbindungsteil gebogen wird, nachdem der Anbringungsteil durch Schmieden geformt worden ist.

6. Verfahren nach einem der vorhergehenden Ansprüche, wobei das Schmieden ein Warmpressen umfasst.

7. Verfahren nach einem der vorhergehenden Ansprüche, wobei der Kugelteil ein einziges Teil umfasst, welches eine durchgehende Materialstruktur bildet.

8. Verfahren nach einem der vorhergehenden Ansprüche, wobei der Anbringungsteil mit einem Anbringungsmechanismus (9) versehen ist.

9. Verfahren nach Anspruch 8, wobei der Anbringungsmechanismus so ausgelegt ist, um den Kugelteil in einer vertikal lösbaren Weise anzubringen.

10. Kugelteil (4) eines Zughakens (2), erhalten durch ein Verfahren nach einem der vorhergehenden Ansprüche 1 bis 9, umfassend eine Kugel (5), einen Verbindungsteil (7) und einen Anbringungsteil (8),
wobei der Verbindungsteil eine im Wesentlichen glatte Außenfläche umfasst, die durch Walzen oder Ziehen erhalten wird,
wobei der Anbringungsteil (8) eine Außenfläche umfasst, die durch Schmieden erhalten wird,
und wobei der Kugelteil ein einziges metallisches Teil umfasst, welches eine einzige durchgehende Struktur bildet.

11. Kugelteil nach Anspruch 10, wobei der Anbringungsteil eine längs seines Außenumfangs verlaufende Schmiedenaht (16) umfasst.

## Revendications

1. Méthode de fabrication d'une partie de boule (4), comprenant une boule (5), une partie de raccordement (7) et une partie de fixation (8), d'un crochet de remorquage (2) pour un véhicule (1), comprenant la fourniture d'une partie de matériau (15) et la mise en forme de ce dernier par forgeage, **caractérisée en ce que** la forme en coupe transversale de la partie de matériau (15) correspond à la forme en coupe transversale de la partie de raccordement (7), et le volume de la partie de matériau (15) est choisi selon le mode de réalisation de la partie de fixation (8) et de la partie de raccordement (7), et la mise en forme par forgeage comprend uniquement le forgeage de l'extrémité de la partie de fixation (8) qui est loin de la boule (5).

2. Méthode selon la revendication 1, dans laquelle le choix du volume de la partie de matériau comprend le raccourcissement de la partie de matériau (15) à une certaine longueur.

3. Méthode selon l'une quelconque des revendications précédentes, dans laquelle la boule (5) est produite par refoulement de la partie de matériau à partir de laquelle la partie de boule est faite.

4. Méthode selon l'une quelconque des revendications précédentes, dans laquelle la partie de raccordement est incurvée par forgeage de manière à former la partie de fixation.

5. Méthode selon l'une quelconque des revendications précédentes, dans laquelle la partie de raccordement est incurvée par forgeage après que la pièce de fixation a été mise en forme.

6. Méthode selon l'une quelconque des revendications précédentes, dans laquelle le forgeage comprend un emboutissage à chaud.

7. Méthode selon l'une quelconque des revendications précédentes, dans laquelle la partie de boule comprend une seule partie formant une structure continue de matériau.

8. Méthode selon l'une quelconque des revendications précédentes, dans laquelle la partie de fixation est pourvue d'un mécanisme de fixation (9).

9. Méthode selon la revendication 8, dans laquelle le mécanisme de fixation est configuré de façon à monter la partie de boule de manière amovible verticalement.

10. Partie de boule (4) d'un crochet de remorquage (2) obtenu par un procédé selon l'une quelconque des revendications précédentes 1 à 9, comprenant une boule (5), une partie de raccordement (7) et une pièce de fixation (8), la partie de raccordement comprend une surface extérieure sensiblement lisse qui est obtenue par laminage ou étirage, et la partie de fixation (8) comprend une surface extérieure qui est obtenue par forgeage, ladite partie de boule comporte une seule partie métallique formant une seule structure continue.

11. Partie de boule selon la revendication 10, dans laquelle la partie de fixation comprend une liaison par forgeage (16) se prolongeant le long de la périphérie extérieure de celle-ci.
